# FASCICULE DE BREVET EUROPEEN

(11) **EP 2 549 836 B1**
(45) Date de publication et mention de la délivrance du brevet: **29.12.2021**
(21) Numéro de dépôt: 12176556.4
(22) Date de dépôt: 16.07.2012
(51) Int. Cl.: B60Q 11/00, B60Q 1/26, H05B 45/10, H05B 45/46

(54) **Circuit de commande d'un dispositif de signalisation ou d'éclairage à double fonction et procédé de commande correspondant**
Steuerschaltung einer Doppelfunktions-Signalisierungs- oder -Beleuchtungsvorrichtung, und entsprechendes Steuerungsverfahren
Circuit for controlling a dual-function lighting or signalling device and corresponding control method

(30) Priorité: 21.07.2011 FR 1156601
(43) Date de publication de la demande: 23.01.2013
(73) Titulaire: VALEO VISION, 93012 Bobigny (FR)
(72) Inventeur: Seif, Lothar, 93250 Villemomble (FR)
(74) Mandataire: Valeo Visibility

(56) Documents cités:
- EP-A2- 1 087 642
- GB-A- 2 418 244
- US-B1- 6 371 636

## Description

L'invention a trait à un circuit de commande et d'alimentation d'un module de signalisation et/ou d'éclairage notamment pour véhicule automobile. Plus particulièrement l'invention a trait à un tel circuit de commande pour un module de signalisation et/ou d'éclairage assurant au moins deux fonctions de signalisation et/ou d'éclairage à partir des mêmes sources lumineuses. L'invention a trait également à un module de signalisation et/ou d'éclairage équipé du circuit en question. L'invention a trait également au procédé de mise en œuvre par le circuit de commande ainsi qu'à un microcontrôleur mettant en œuvre le procédé.

L'utilisation d'un même groupe de sources lumineuses, en particulier du type diode à électroluminescence (LED), pour assurer au moins deux fonctions d'éclairage est connue notamment du document de brevet US 2010/0066249 A1. Dans cet enseignement, un groupe de neuf LEDs disposées selon une matrice de 3 par 3 est alimenté de manière sélective par deux alimentations distinctes, l'une correspondant à la fonction « stop » et l'autre correspondant à la fonction « lanterne » (feu de signalisation arrière). L'alimentation correspondant à la fonction « stop » assure un niveau d'éclairage supérieure à celle de la fonction « lanterne ». En effet, l'alimentation de la fonction « lanterne » fournit un courant plus faible en raison de la présence d'une résistance supplémentaire. Les LEDs disposées en matrice forment trois branches parallèles avec toutefois des connexions entre les branches à chaque niveau. Ce type de branchement a pour effet qu'en cas de défaillance d'une LED, les LEDs restantes de la branche correspondante seront quand même sous tension et participeront à la signalisation. Cependant, étant donné que le courant parcourant ces LEDs restantes proviendra des LEDs du ou des niveaux supérieures des autres branches, il en résultera une inhomogénéité de puissance d'éclairage entre les LEDs. Une telle inhomogénéité n'est pas souhaitable pour diverses raisons, notamment esthétiques et de détection de défaillance. En effet, la détection de défaillance est particulièrement délicate car seule l'intensité du courant parcourant la totalité des LEDs pourra être surveillée et la différence de consommation lors de la défaillance d'une seule LED parmi un groupe de neuf implique une exigence particulière au niveau de la précision de mesure.

De plus, la luminosité des LEDs nécessite, pour être contrôlée, un courant dont l'intensité demeure constante quelle que soit la tension d'entrée. Leur alimentation est donc nettement plus complexe que celles des ampoules à incandescence, qu'il suffit de connecter à une batterie. En effet, la relation qui lie la tension et le courant d'alimentation des semi conducteur émissifs (les LEDs) n'est pas linéaire. Ainsi, une petite augmentation de tension appliquée à la LED peut entraîner une augmentation importante du courant et donc du flux lumineux émis. Les LEDs affichent une courbe caractéristique en tension directe similaire à celle des diodes. En deçà de leur seuil de commutation, soit environ 3,5 V pour une LED blanche, très peu de courant les traverse. En revanche, au-dessus de ce seuil, à mesure que la tension directe augmente, la circulation du courant croît de façon exponentielle. En cas d'alimentation de la LED au travers d'une résistance externe en série avec la source de tension, si la tension d'alimentation augmente peu, le courant continu parcourant la LED est modifié très sensiblement et la performance d'émission de la LED qui est approximativement proportionnelle au courant qui la traverse évolue en conséquence. La résistance série doit donc être ajustée pour chaque LED en conséquence. Cet ajustement n'est valable que pour une plage de température donnée et il est essentiel de prendre en compte l'environnement thermique pour la définition de la résistance série voire faire évoluer celle-ci en température pour le cas d'un domaine de température étendu. De plus, une trop grande augmentation de la tension d'alimentation des LEDs au travers d'une résistance entraîne un passage de courant trop important pouvant détériorer le composant.

De plus, les coordonnées chromatiques des LEDs blanches varient en fonction du courant d'alimentation qui les traverse. Ainsi, si on effectue un pilotage de plusieurs LEDs en parallèle, (c'est-à-dire un pilotage en tension), le courant qui traverse chaque LED est différent du fait des disparités intrinsèques entre composants liées à la technologie et il peut y avoir des différences significatives en coordonnées chromatiques entre chaque LED qui se traduisent par différents aspects colorés de blancs émis.

La mise en conformité d'un dispositif de signalisation tel que celui de l'enseignement décrit ci-avant peut poser problème dans la mesure où un même circuit électrique doit permettre aux deux fonctions de remplir les conditions réglementaires. En effet, le rapport de puissance entre la fonction « stop » et la fonction « lanterne » est 3 assez important, généralement supérieur à un facteur 10. De plus, la réglementation impose non seulement des valeurs minimales d'éclairage mais également des valeurs maximales.

Le document EP 1 087 642 A2 montre un autre exemple de circuit de commande permettant d'assurer au moins deux fonctions de signalisation distinctes.

L'invention a pour objectif de pallier au moins un des inconvénients sus mentionnés.

Plus particulièrement, l'invention a pour objectif de proposer un circuit de commande permettant un meilleur contrôle des multiples fonctions de signalisation et/ou d'éclairage d'un dispositif. Plus particulièrement encore, l'invention a pour objectif de proposer un circuit de commande permettant un meilleur contrôle des niveaux d'éclairage en vue de la mise en conformité avec la réglementation. L'invention a également pour objectif de proposer un module d'éclairage et/ou de signalisation intégrant un tel circuit de commande, un procédé de contrôle et un microcontrôleur intégrant un tel procédé.

L'invention consiste en un circuit de commande selon la revendication 1. 2.

De manière préférentielle, l'intensité du courant est contrôlée par modulation de largeur d'impulsions (MLI) (Pulse Width Modulation).

Les fonctions d'éclairage et/ou de signalisation comprennent une première fonction correspondant à une première intensité moyenne et une deuxième fonction correspondant à une deuxième intensité moyenne.

Selon l'invention, l'unité de contrôle comprend une première entrée pour un signal de commande d'une première fonction d'éclairage et/ou de signalisation et une deuxième entrée pour un signal de commande d'une deuxième fonction d'éclairage et/ou de signalisation.

D'un point de vue réglementation, le branchement de l'enseignement selon l'état de la technique décrit ci-avant (US 2010/0066249 A1) est considéré comme multi-sections, d'une part en raison de la présence de plusieurs sections, en l'occurrence plusieurs branches qui sont distinctes et d'autre part en raison du fait que certaines branches restent actives en cas de défaillance d'une LED. Par opposition, un dispositif de signalisation mono-section, bien qu'il puisse comprendre plusieurs sources lumineuses, est assimilable d'un point de vue fonctionnement à un dispositif à une seule source lumineuse, à savoir que toutes les sources lumineuses éclairent nécessairement en même temps et qu'aucune n'éclaire en cas de défaillance. La réglementation pour les dispositifs de signalisation multi-sections peut être sensiblement différente que pour les dispositifs mono-section. En effet, à titre d'exemple, la législation en vigueur aux Etats-Unis d'Amérique pour les lanternes arrières (FMVSS 108-SAE J585e, « tail lamp ») impose des intensités d'éclairage minimales en différents points par rapport au dispositif ainsi qu'une intensité maximale qui diffèrent en fonction de la nature multi-sections ou mono-section du module de signalisation. En effet, à titre d'exemple l'intensité d'éclairage minimale à un angle de 5° dans un plan horizontal pour un dispositif mono-section est de 2 cd (candélas) et l'intensité maximale (indépendamment de l'emplacement du point où la mesure est faite) est de 18 cd, alors que les valeurs correspondantes pour un module multi-sections sont de 5cd et 25 cd, respectivement. La législation américaine pour les feux stop (FMVSS 108-SAE J585e) montre un décalage similaire entre les modules mono-section et multi-sections.

Le fait de pouvoir assimiler un réseau de sources lumineuse de types LED à un module mono-section d'un point de vue définition selon la réglementation confère une certaine liberté quant au dimensionnement et à la modulation différentielle de courant pour les différentes fonctions d'éclairage et/ou de signalisation. En effet, en raisons des différences d'exigences photométriques de certaines réglementations pour une même fonction d'éclairage selon que le montage est considéré comme mono-section ou comme multi-sections, les mesures techniques de l'invention permettent de conférer au module une plus grande liberté au niveau dimensionnement (modulation d'intensité du courant et photométrie résultante).

Selon un encore autre mode avantageux de l'invention, les au moins deux fonctions d'éclairage et/ou de signalisation sont parmi les fonctions : feux de position arrière, stop, clignotant arrière; ou parmi les fonctions : feux de position avant, éclairage avant et clignotant avant.

Selon l'invention, les sources lumineuses sont branchées en parallèle avec l'unité de contrôle de manière à former au moins deux sections d'éclairage et/ou de signalisation parallèles pour la première et la deuxième fonction, lesdites sections étant connectées séparément avec ladite unité, ladite unité étant apte à détecter un défaut de passage de courant dans chaque section et, en cas de détection de défaut dans une desdites sections, configurée pour maintenir active(s) la ou les sections restantes en présence de la première fonction et désactiver toutes les sections en présence de la deuxième fonction.

Selon un encore autre mode avantageux de l'invention, la première fonction d'éclairage et/ou de signalisation correspond à une première intensité moyenne, la deuxième fonction d'éclairage et/ou de signalisation correspond à une deuxième intensité moyenne qui est supérieure, préférentiellement selon un facteur supérieur ou égal à 5, plus préférentiellement encore à 8, à ladite première intensité moyenne.

Selon un encore autre mode avantageux de l'invention, la première fonction d'éclairage est une fonction « feu de signalisation arrière » et la deuxième fonction d'éclairage est une fonction « stop ».

Selon un encore autre mode avantageux de l'invention, l'unité de contrôle est configurée pour, lors de la détection de défaillance d'une des sections de la première fonction, augmenter l'intensité du courant passant par les autres sections de ladite fonction de manière à au moins partiellement compenser la perte d'éclairage.

L'invention consiste également en un module d'éclairage et/ou de signalisation notamment pour véhicule, caractérisé en ce qu'il comprend un circuit de commande selon l'invention définie ci-avant.

L'invention consiste également en un procédé de contrôle des sources lumineuses d'un module d'éclairage et/ou de signalisation pour véhicule, selon la revendication 8.

L'invention consiste également en un microcontrôleur selon la revendication 9.

D'autres caractéristiques et avantages de la présente invention seront mieux compris à l'aide de la description et des dessins parmi lesquels :
La figure 1 illustre le schéma d'un circuit de commande et d'alimentation d'un réseau de LEDs d'un module de signalisation assurant deux fonctions à partir des mêmes LEDs.
La figure 2 illustre un module de signalisation équipé d'un circuit de commande selon la figure 1 et conforme à l'invention.
La figure 3 est un schéma logique d'un procédé de contrôle des sources lumineuses d'un dispositif d'éclairage et/ou de signalisation tel que celui de la figure 2, le procédé étant conforme à l'invention.
La figure 4 est une illustration schématique d'une unité de contrôle des figures 1 et 2 et conforme à l'invention.

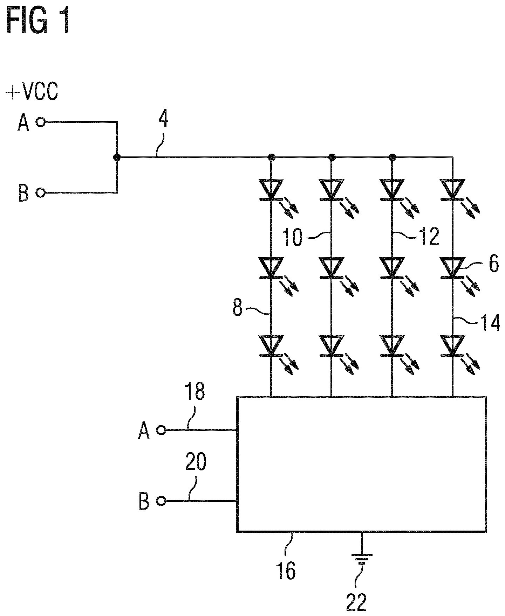

Un réseau de sources lumineuses du type LED est illustré à la figure 1. Il comprend quatre LEDs 12 de caractéristiques identiques ou similaires disposées selon quatre branches 8, 10, 12 et 14 parallèles, chaque branche comprenant trois LEDs en série. Les quatre branches 8, 10, 12 et 14 sont reliées à une entrée d'alimentation 4 en tension de bord du véhicule, comme par exemple une tension continue (VCC) de 12 Volt couramment disponible sur un véhicule. Cette entrée 4 comporte deux connecteurs pour les deux fonctions de signalisation A et B du module. Dans le cas d'un circuit d'alimentation pour un module de signalisation, les fonctions A et B peuvent être, par exemple parmi les fonctions suivantes : lanterne (feux de position arrière), stop, clignotant, feux de recul. Dans le cas d'un dispositif d'éclairage, les fonctions A et B peuvent être, par exemple, parmi les fonctions suivantes : lanterne (feux de position avant), code, route, clignotant.

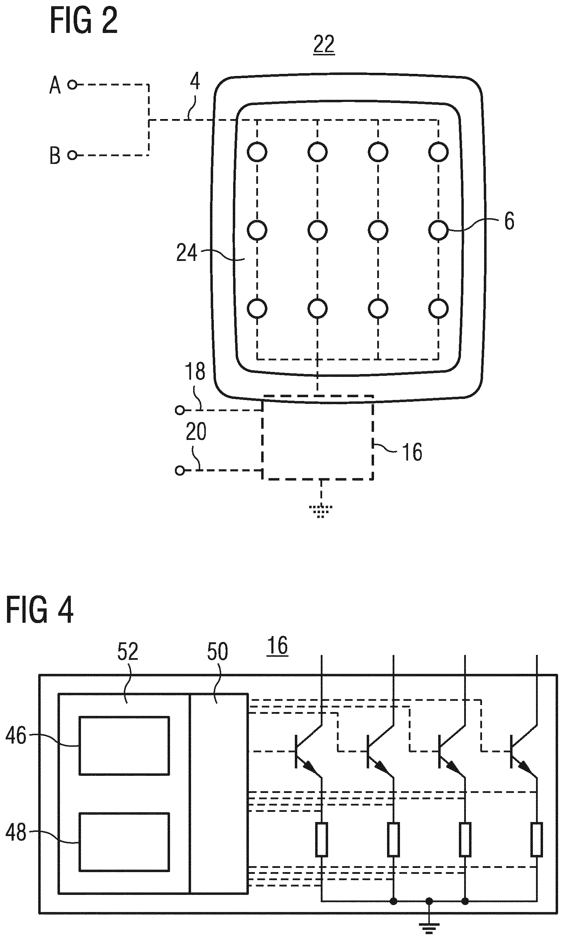

Le circuit de commande 2 qui est illustré à la figure 2 est destiné à un module de signalisation assurant deux fonctions A et B à partir des mêmes LEDs. La fonction A est une fonction lanterne et la fonction B est une fonction stop. En d'autres termes les LEDs seront parcourues par un courant plus important pour la fonction B ou stop de manière à se démarquer de manière visible de la fonction de simple lanterne A.

Le réseau de LEDs est également relié à une masse 22 du véhicule où le circuit est destiné à être monté. Entre le réseau de LEDs et la masse 22 est disposée une unité de contrôle 16. Cette dernière a pour rôle de moduler et de contrôler le courant parcourant les différentes branches de LEDs qui sont disposées en parallèle. Il est à noter que chaque branche est connectée directement à l'unité de contrôle de manière à pouvoir contrôler chaque branche séparément.

La mise en marche de chaque fonction de signalisation A et/ou B se fait par envoi d'un signal correspondant vers l'unité de contrôle 16. Cette dernière comporte à titre d'exemple et comme illustré à la figure 1 deux entrées de sélection des fonctions, une entrée 18 pour la fonction A et une entrée 20 pour la fonction B. Toute autre disposition d'entrée(s) pour signaux de commande, courante pour l'homme de métier est bien sûr possible.

Le pilotage des LEDs en courant est préférable à un pilotage en tension, afin de maîtriser le flux lumineux en sortie d'une part, et d'autre part à s'assurer que le courant dans la LED ne dépasse pas le seuil maximum. Les LEDs doivent être pilotées en courant, c'est-à-dire que l'électronique de l'unité de contrôle doit pouvoir fixer le courant qui traverse les LEDs dans chaque branche, indépendamment du nombre de LEDs que l'on met en série. Le mode de pilotage privilégié pour les applications dans l'automobile est à courant pulsé (PWM).

L'unité de contrôle pourra présenter diverses architectures, en soi connues de l'homme de métier, aptes à assurer la modulation d'intensité dans chaque branche du réseau de LEDs. Un exemple d'architecture est illustré à la figure 4. L'unité de contrôle 16 comprend par exemple un microcontrôleur 52 ainsi qu'au moins un moyen de commutation tel un transistor par branche, le microcontrôleur commandant les différents moyens de commutation. La mesure du courant parcourant chaque branche pourra se faire par exemple par la mesure de la tension aux bornes d'une résistance connectée spécifiquement à une branche, cette mesure analogique étant ensuite convertie en information numérique avant d'être envoyée vers le microcontrôleur. Le microcontrôleur 52 comprend classiquement une mémoire 46, un processeur et une interface 50.

Le circuit de commande peut être disposé à divers endroits du véhicule, à proximité du module d'éclairage et/ou de signalisation tout comme à distance de ce dernier. Il peut notamment être intégré au réseau électrique du véhicule. Alternativement, il peut également être intégré au module d'éclairage et/ou de signalisation ou encore au dispositif d'éclairage et/ou de signalisation, ledit dispositif comprenant ledit module, un boîtier et d'éventuel autres composants. La figure 2 illustre un module de signalisation pour les fonctions lanterne et stop comprenant un circuit de commande conforme à celui de la figure 1. Le module 22 comprend notamment un réflecteur 24 ainsi que le réseau de LEDs 6 disposées sur ledit réflecteur. Il comprend également le circuit de commande illustré en pointillé de manière schématique pour des raisons de clarté d'exposé.

Il est à noter que le réseau constitué d'une série de branches disposées en parallèles est purement exemplatif. En effet, les branches peuvent prendre la forme de circuits distincts décrivant éventuellement des formes complexes ou étant imbriquées entre eux. La notion de branche peut donc être généralisée à la notion de section, sachant que les différentes sections d'un tel réseau assurant au moins deux fonctions d'éclairage et/ou de signalisation doivent être connectées en parallèles. Les branches de l'exemple de réalisation de l'invention selon les figures 1 et 2 sont ainsi des cas particuliers de sections.

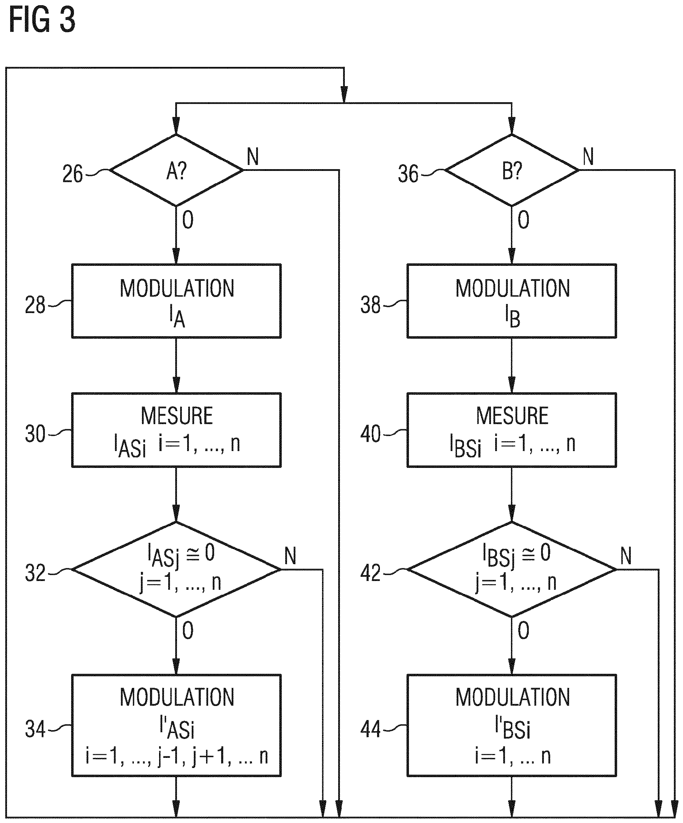

Le circuit de commande décrit ci-avant est configuré pour fonctionner essentiellement selon la logique illustrée à la figure 3.

Si on considère d'abord la suite logique verticale de gauche, cette dernière commence en 26 par la vérification de la présence du signal de sélection pour la fonction A. En cas de réponse positive, c'est-à-dire lorsque le signal A (référence 18 à la figure 1) est bien présent, l'unité de contrôle (référence16 à la figure 1) va alors en 28 moduler le courant passant par chaque section ou branche à un niveau l_{A} correspondant au courant qui doit parcourir chacune des LEDs pour assurer les performances de signalisation de la fonction A, à savoir la fonction lanterne. L'unité de contrôle va alors en 30 mesurer ou du moins surveiller le courant I_{ASi} parcourant chaque section Sᵢ pour i allant de 1 à n, n étant le nombre de sections. Une défaillance est détectée lorsque le courant d'une section I_{ASj} , j étant compris entre 1 et n, devient nul ou proche de zéro. Il s'agit de l'étape 32 à la figure. Dans ce cas, le module est en défaut partiel et maintient en 34 les autres branches à un niveau de modulation I'_{ASi}, i allant de 1 à j-1, j+1 et jusqu'à n, supérieure au niveau l_{A} de manière à au moins partiellement compenser la perte d'éclairage ou de signalisation de la section défaillante et hors-service. Le module assurant la fonction lanterne A est bien assimilé à un module multi-sections dans la mesure où, en cas de défaillance d'une section, les autres continent à fonctionner.

Si on considère maintenant la suite logique verticale de droite de la figure, on observe que la première étape 36 est une vérification de la présence du signal de sélection de la fonction B. En cas de présence de ce signal, l'unité de contrôle va alors en 38 moduler à un niveau I_{B} l'intensité du courant parcourant les différentes sections 1 à n. L'intensité moyenne I_{B} est supérieure à l'intensité moyenne l_{A}. En effet, la fonction stop (B) requiert une photométrie nettement supérieure à celle de la fonction lanterne (A). A l'étape 40, le courant I_{BSi} parcourant chaque section Sᵢ pour i allant de 1 à n, n étant le nombre de sections, est mesuré ou du moins contrôlé par l'unité de contrôle. A l'étape 42, une défaillance est détectée lorsque le courant d'une section I_{BSj} , j étant compris entre 1 et n, devient nul ou est proche de zéro. Dans ce cas, à l'étape suivante 44 le courant de toutes les sections est interrompu de manière à mettre la fonction stop totalement hors service. Cette action en cas de défaillance a pour effet de faire réagir le module pour cette fonction de manière similaire à un module classique avec une seule source lumineuse. Au regard de certaines réglementations, cette fonctionnalité a pour effet qu'il est considéré comme un module mono-section bien qu'il comporte physiquement plusieurs sections. Le module devra donc pour cette fonction répondre aux exigences photométriques de la réglementation pour un module mono-section, ces exigences étant éventuellement plus favorables pour le dimensionnement du module pour les deux fonctions.

En effet, la réglementation américaine FMVSS 108-SAE J586 pour un feu stop prévoit une intensité lumineuse minimale à un angle de 5° dans un plan horizontal de 80 cd (Candela) pour la version mono-section et de 110 cd pour la version à trois sections. Elle prévoit également une intensité lumineuse maximale en tout point de 300 cd pour la version mono-section et de 420 cd pour la version à trois sections. La réglementation américaine FMVSS 108-SAE J585e pour un feu de position arrière à trois sections prévoit une intensité lumineuse minimale à un angle de 5° dans un plan horizontal de 5 cd et une intensité lumineuse maximale en tout point de 25 cd. Dans le cas d'un module de signalisation combinant la fonction feu de position arrière à trois sections et la fonction stop, le fait que la fonction stop soit également à trois sections imposerait un ratio moyen des intensités I_{B}/I_{A} de l'ordre de 16.8 (420/25). Un tel ratio imposerait un courant moyen l_{A} très faible par rapport au courant moyen I_{B}. Un tel ratio peut poser des problèmes de design notamment au niveau de la détection de défaillance qui pourrait ne pas fonctionner en cas de défaillance d'une section de la fonction feu de position arrière (A). Le fait de faire fonctionner la fonction stop comme un module mono-section ramène le ratio des intensités I_{B}/I_{A} à une valeur de l'ordre de 12 (300/25), ce qui est plus favorable.

## Revendications

1. Circuit de commande (2) d'un module d'éclairage et/ou de signalisation (22) pour véhicule, ledit module (22) comprenant au moins deux fonctions d'éclairage et/ou de signalisation (A, B) réalisées, chacune, avec au moins deux mêmes sources lumineuses (6) parcourues par un courant électrique dont l'intensité moyenne est différente selon la fonction d'éclairage et/ou de signalisation, le circuit de commande comprenant :
une entrée (4) pour une source d'alimentation desdites sources lumineuses ;
un branchement desdites sources lumineuses en parallèle à la dite entrée d'alimentation (4) et à une masse (22) de manière à former au moins deux sections d'éclairage et/ou de signalisation (8, 10, 12, 14) parallèles pour la première et la deuxième fonction (A, B),
une unité de contrôle (16) de l'intensité du courant parcourant lesdites sources lumineuses (6), ladite unité étant disposée électriquement entre lesdites sources lumineuses et ladite entrée d'alimentation (4) ou ladite masse (22), comprenant une première entrée (18) pour un signal de commande de la première fonction d'éclairage et/ou de signalisation (A) et une deuxième entrée (20) pour un signal de commande de la deuxième fonction d'éclairage et/ou de signalisation (B), et lesdites sections étant connectées séparément avec ladite unité (16),
**caractérisé en ce que** ladite unité (16) est configurée pour détecter un défaut de passage de courant dans chaque section, et en cas de détection de défaut dans une desdites sections (8, 10, 12, 14), pour maintenir active(s) la ou les sections restantes en présence de la première fonction (A) et désactiver toutes les sections (8, 10, 12, 14) en présence de la deuxième fonction (B).

2. Circuit de commande selon la revendication 1, **caractérisé en ce que** les sources lumineuses (6) sont des diodes électroluminescentes.

3. Circuit de commande selon l'une des revendications précédentes, **caractérisé en ce que** les au moins deux fonctions d'éclairage et/ou de signalisation (A, B) sont parmi les fonctions : feux de position arrière, stop, clignotant arrière ; ou parmi les fonctions : feux de position avant, éclairage avant et clignotant avant.

4. Circuit de commande selon l'une des revendications précédentes, **caractérisé en ce que** la première fonction d'éclairage et/ou de signalisation (A) correspond à une première intensité moyenne (I_{A}), la deuxième fonction d'éclairage et/ou de signalisation (B) correspond à une deuxième intensité moyenne (I_{B}) qui est supérieure, préférentiellement selon un facteur supérieur ou égal à 5, à ladite première intensité moyenne.

5. Circuit de commande selon l'une des revendications précédentes, **caractérisé en ce que** la première fonction d'éclairage et/ou de signalisation (A) est une fonction « feu de position arrière » et la deuxième fonction d'éclairage et/ou de signalisation (B) est une fonction « stop ».

6. Circuit de commande selon l'une des revendications précédentes, **caractérisé en ce que** l'unité de contrôle (16) est configurée pour, lors de la détection de défaillance d'une des sections (8, 10, 12, 14) de la première fonction (A), augmenter l'intensité du courant (I'_{AS}) passant par les autres sections de ladite fonction (A) de manière à au moins partiellement compenser la perte d'éclairage.

7. Module d'éclairage et/ou de signalisation (22) pour véhicule, **caractérisé en ce qu'**il comprend un circuit de commande (2) selon l'une des revendications précédentes.

8. Procédé de contrôle des sources lumineuses (6) d'un module d'éclairage et/ou de signalisation (22) pour véhicule, le module comprenant au moins deux fonctions d'éclairage et/ou de signalisation (A, B) réalisées, chacune, avec au moins deux mêmes sources lumineuses (6) branchées en parallèle de manière à former au moins deux sections d'éclairage et/ou de signalisation (8, 10, 12, 14) parallèles pour la première et la deuxième fonction (A, B), lesdites sources lumineuses (6) étant parcourues par un courant électrique dont l'intensité moyenne est différente selon la fonction d'éclairage et/ou de signalisation, le procédé comprenant les étapes :
a) détection de la présence d'au moins un signal d'activation d'une des fonctions d'éclairage et/ou de signalisation (26 ; 36) ;
b) sur base de ladite détection, modulation (28 ; 38) de l'intensité du courant parcourant lesdites sources lumineuses afin de réaliser la fonction d'éclairage et/ou de signalisation correspondante ;
le procédé étant **caractérisé par** les étapes suivantes:
c) détection de défaillance des différentes sections (30, 32) ;
d) lors de la détection de défaillance d'une desdites sections en présence du signal d'activation de la première fonction d'éclairage, maintien de la ou des sections restantes correspondant à ladite première fonction (34) et augmentation du courant passant par au moins une section restante, préférentiellement toutes les sections restantes, correspondant à la première fonction (34) ;
e) lors de la détection de défaillance d'une desdites sections en présence du signal d'activation de la deuxième fonction d'éclairage, désactivation de toutes les branches correspondant à ladite deuxième fonction (44).

9. Microcontrôleur (52) configuré pour contrôler l'intensité du courant parcourant les sources lumineuses d'un module d'éclairage et/ou de signalisation (22) pour véhicule, le module comprenant au moins deux fonctions d'éclairage et/ou signalisation (A, B) réalisées, chacune, avec au moins deux mêmes sources lumineuses (6) branchées en parallèle de manière à former au moins deux sections d'éclairage et/ou de signalisation (8, 10, 12, 14) parallèles pour la première et la deuxième fonction (A, B), lesdites sources lumineuses (6) étant parcourues par un courant électrique dont l'intensité moyenne est différente selon la fonction d'éclairage et/ou de signalisation, le microcontrôleur comprenant un processeur (48), une mémoire (46) et au moins une interface (50) adaptée à communiquer avec un dispositif de modulation du courant, le microcontrôleur étant **caractérisé en ce qu'**il comprend des instructions dans sa mémoire (46) qui conduisent le processeur (48) à exécuter les étapes du procédé selon la revendication 8.

## Patentansprüche

1. Steuerschaltkreis (2) eines Beleuchtungs- und/oder Signalisierungsmoduls (22) für ein Fahrzeug, wobei das Modul (22) mindestens zwei Beleuchtungs- und/oder Signalisierungsfunktionen (A, B) enthält, die je mit mindestens zwei gleichen Lichtquellen (6) durchgeführt werden, die von einem elektrischen Strom durchflossen werden, dessen mittlere Stärke je nach der Beleuchtungs- und/oder Signalisierungsfunktion unterschiedlich ist, wobei der Steuerschaltkreis enthält:
einen Eingang (4) für eine Versorgungsquelle der Lichtquellen;
eine Parallelschaltung der Lichtquellen mit der Versorgungseingang (4) und mit einer Masse (22), um mindestens zwei parallele Beleuchtungs- und/oder Signalisierungsabschnitte (8, 10, 12, 14) für die erste und die zweite Funktion (A, B) zu bilden,
eine Kontrolleinheit (16) der Stärke des die Lichtquellen (6) durchfließenden Stroms, wobei die Einheit elektrisch zwischen den Lichtquellen und dem Versorgungseingang (4) oder der Masse (22) angeordnet ist, die einen ersten Eingang (18) für ein Steuersignal der ersten Beleuchtungs- und/oder Signalisierungsfunktion (A) und einen zweiten Eingang (20) für ein Steuersignal der zweiten Beleuchtungs- und/oder Signalisierungsfunktion (B) enthält, und die Abschnitte getrennt mit der Einheit (16) verbunden sind,
**dadurch gekennzeichnet, dass** die Einheit (16) konfiguriert ist, einen Stromdurchgangsfehler in jedem Abschnitt zu erfassen, und im Fall der Erfassung eines Fehlers in einem der Abschnitte (8, 10, 12, 14) den oder die verbleibenden Abschnitt(e) in Gegenwart der ersten Funktion (A) aktiv zu halten und alle Abschnitte (8, 10, 12, 14) in Gegenwart der zweiten Funktion (B) zu deaktivieren.

2. Steuerschaltkreis nach Anspruch 1, **dadurch gekennzeichnet, dass** die Lichtquellen (6) Elektrolumineszenzdioden sind.

3. Steuerschaltkreis nach einem der vorhergehenden Ansprüche, **dadurch gekennzeichnet, dass** die mindestens zwei Beleuchtungs- und/oder Signalisierungsfunktionen (A, B) unter den Funktionen: hintere Begrenzungsleuchten, Stopp, hintere Blinkleuchte; oder unter den Funktionen: vordere Begrenzungsleuchten, vordere Beleuchtung und vordere Blinkleuchte sind.

4. Steuerschaltkreis nach einem der vorhergehenden Ansprüche, **dadurch gekennzeichnet, dass** die erste Beleuchtungs- und/oder Signalisierungsfunktion (A) einer ersten mittleren Stärke (I_{A}) entspricht, die zweite Beleuchtungs- und/oder Signalisierungsfunktion (B) einer zweiten mittleren Stärke (I_{B}) entspricht, die vorzugsweise um einen Faktor höher als oder gleich 5 höher ist als die erste mittlere Stärke.

5. Steuerschaltkreis nach einem der vorhergehenden Ansprüche, **dadurch gekennzeichnet, dass** die erste Beleuchtungs- und/oder Signalisierungsfunktion (A) eine Funktion "hintere Begrenzungsleuchte" ist, und die zweite Beleuchtungs- und/oder Signalisierungsfunktion (B) eine Funktion "Stopp" ist.

6. Steuerschaltkreis nach einem der vorhergehenden Ansprüche, **dadurch gekennzeichnet, dass** die Kontrolleinheit (16) konfiguriert ist, bei der Erfassung eines Ausfalls eines der Abschnitte (8, 10, 12, 14) der ersten Funktion (A) die Stärke des Stroms (I'_{AS}) zu erhöhen, der durch die anderen Abschnitte der Funktion (A) geht, um den Beleuchtungsverlust zumindest teilweise zu kompensieren.

7. Beleuchtungs- und/oder Signalisierungsmodul (22) für ein Fahrzeug, **dadurch gekennzeichnet, dass** es einen Steuerschaltkreis (2) nach einem der vorhergehenden Ansprüche enthält.

8. Verfahren zur Kontrolle der Lichtquellen (6) eines Beleuchtungs- und/oder Signalisierungsmoduls (22) für ein Fahrzeug, wobei das Modul mindestens zwei Beleuchtungs- und/oder Signalisierungsfunktionen (A, B) enthält, die je mit mindestens zwei gleichen Lichtquellen (6) durchgeführt werden, die parallelgeschaltet sind, um mindestens zwei parallele Beleuchtungs- und/oder Signalisierungsabschnitte (8, 10, 12, 14) für die erste und die zweite Funktion (A, B) zu bilden, wobei die Lichtquellen (6) von einem elektrischen Strom durchflossen werden, dessen mittlere Stärke je nach der Beleuchtungs- und/oder Signalisierungsfunktion unterschiedlich ist, wobei das Verfahren die Schritte enthält:
a) Erfassung der Gegenwart mindestens eines Aktivierungssignals einer der Beleuchtungs- und/oder Signalisierungsfunktionen (26; 36);
b) auf der Basis der Erfassung, Modulation (28; 38) der Stärke des die Lichtquellen durchfließenden Stroms, um die entsprechende Beleuchtungs- und/oder Signalisierungsfunktion durchzuführen;
wobei das Verfahren durch die folgenden Schritte gekennzeichnet ist:
c) Erfassung eines Ausfalls der verschiedenen Abschnitte (30, 32);
d) bei der Erfassung eines Ausfalls eines der Abschnitte in Gegenwart des Aktivierungssignals der ersten Beleuchtungsfunktion, Halten des(der) verbleibenden Abschnitts(Abschnitte) entsprechend der ersten Funktion (34) und Erhöhung des durch mindestens einen verbleibenden Abschnitt, vorzugsweise alle verbleibenden Abschnitte, fließenden Stroms entsprechend der ersten Funktion (34);
e) bei der Erfassung eines Ausfalls eines der Abschnitte in Gegenwart des Aktivierungssignals der zweiten Beleuchtungsfunktion, Deaktivierung aller Zweige entsprechend der zweiten Funktion (44).

9. Mikrokontroller (52), der konfiguriert ist, die Stärke des die Lichtquellen eines Beleuchtungs- und/oder Signalisierungsmoduls (22) für ein Fahrzeug durchfließenden Stroms zu kontrollieren, wobei das Modul mindestens zwei Beleuchtungs- und/oder Signalisierungsfunktionen (A, B) enthält, die je mit mindestens zwei gleichen Lichtquellen (6) durchgeführt werden, die parallelgeschaltet sind, um mindestens zwei parallele Beleuchtungs- und/oder Signalisierungsabschnitte (8, 10, 12, 14) für die erste und die zweite Funktion (A, B) zu bilden, wobei die Lichtquellen (6) von einem elektrischen Strom durchflossen werden, dessen mittlere Stärke je nach der Beleuchtungs- und/oder Signalisierungsfunktion unterschiedlich ist, wobei der Mikrocontroller einen Prozessor (48), einen Speicher (46) und mindestens eine Schnittstelle (50) enthält, die geeignet ist, mit einer Modulationsvorrichtung des Stroms zu kommunizieren, wobei der Mikrocontroller **dadurch gekennzeichnet ist, dass** er Anweisungen in seinem Speicher (46) enthält, die den Prozessor (48) veranlassen, die Schritte des Verfahrens nach Anspruch 8 auszuführen.

## Claims

1. Control circuit (2) for a lighting and/or signaling module (22) for a vehicle, said module (22) comprising at least two lighting and/or signaling functions (A, B) each implemented with at least two same light sources (6) passed through by an electric current whose average intensity is different depending on the lighting and/or signaling function, the control circuit comprising:
an input (4) for a power source for said light sources;
a connection of said light sources in parallel to said power supply input (4) and to a ground (22) so as to form at least two parallel lighting and/or signaling sections (8, 10, 12, 14) for the first and the second functions (A, B),
a unit (16) for monitoring the intensity of the current passing through said light sources (6), said unit being arranged electrically between said light sources and said power supply input (4) or said ground (22), comprising a first input (18) for a control signal for the first lighting and/or signaling function (A) and a second input (20) for a control signal for the second lighting and/or signaling function (B); and said sections being connected separately with said unit (16),
**characterized in that** said unit (16) is configured to detect a current flow fault in each section, and if a fault is detected in one of said sections (8, 10, 12, 14), to keep the remaining section or sections active in the presence of the first function (1) and deactivate all the sections (8, 10, 12, 14) in the presence of the second function (B) .

2. Control circuit according to claim 1, **characterized in that** the light sources (6) are light-emitting diodes.

3. Control circuit according to one of the preceding claims, **characterized in that** the at least two lighting and/or signaling functions (A, B) are from among the following functions: rear position lights, brake lights, rear blinker; or from among the following functions: front position lights, front lighting and front blinker.

4. Control circuit according to one of the preceding claims, **characterized in that** the first lighting and/or signaling function (A) corresponds to a first average intensity (I_{A}), the second lighting and/or signaling function (B) corresponds to a second average intensity (I_{B}) which is greater, preferably by a factor greater than or equal to 5, than said first average intensity.

5. Control circuit according to one of Claims 5 and 6, **characterized in that** the first lighting and/or signaling function (A) is a "rear position light" function and the second lighting and/or signaling function (B) is a "brake" function.

6. Control circuit according to one of the preceding claims, **characterized in that** the monitoring unit (16) is configured to, when the failure of one of the sections (8, 10, 12, 14) of the first function (A) is detected, increase the intensity of the current (I'_{AS}) passing through the other sections of said function (A) so as to at least partially compensate for the loss of lighting.

7. Lighting and/or signaling module (22) for a vehicle, **characterized in that** it comprises a control circuit (2) according to one of the preceding claims.

8. Method for monitoring the light sources (6) of a lighting and/or signaling module (22) for a vehicle, the module comprising at least two lighting and/or signaling functions (A, B) each implemented with at least two same light sources (6) connected in parallel so as to form at least two parallel lighting and/or signaling sections (8, 10, 12, 14) for the first and the second functions (A, B), said light sources (6) being passed through by an electric current whose average intensity is different depending on the lighting and/or signaling function, the method comprising the following steps:
a) detection of the presence of at least one activation signal for one of the lighting and/or signaling functions (26; 36);
b) on the basis of said detection, modulation (28; 38) of the intensity of the current passing through said light sources in order to implement the corresponding lighting function and/or signaling function;
the method being **characterized by** the following steps:
c) detection of the failure of the different sections (30, 32);
d) when the failure of one of said sections is detected in the presence of the activation signal of the first lighting function, maintenance of the remaining section (s) corresponding to said first function (34)and increasing of the current passing through at least one remaining section, preferably through all remaining sections, corresponding to the first function (34), and
e) when the failure of one of said sections is detected in the presence of the activation signal of the second lighting function, deactivation of all the sections corresponding to said second function (44).

9. Microcontroller (52) configured to monitor the intensity of the current passing through the light sources of a lighting and/or signaling module (22) for a vehicle, the module comprising at least two lighting and/or signaling functions (A, B) each implemented with at least two same light sources (6) connected in parallel so as to form at least two parallel lighting and/or signaling sections (8, 10, 12, 14) for the first and the second functions (A, B), said light sources being passed through by an electric current whose average intensity is different depending on the lighting and/or signaling function, the microcontroller comprising a processor (48), a memory (46) and at least one interface (50) adapted to communicate with a current modulation device, the microcontroller being **characterized in that** it comprises instructions in its memory (46) which lead the processor (48) to perform the steps of the method of claim 8.
